# EUROPEAN PATENT SPECIFICATION

(11) **EP 4 161 318 B1**
(45) Date of publication and mention of the grant of the patent: **13.12.2023**
(21) Application number: 21728068.4
(22) Date of filing: 25.05.2021
(51) Int. Cl.: A47G 19/22, B65D 47/20, F16K 15/14, F16M 11/14, B65D 47/24, B65D 47/30, F16C 11/06

(54) **VALVE ACTUATED BOTTLE CAP**
VENTILBETÄTIGTER FLASCHENVERSCHLUSS
BOUCHON DE BOUTEILLE ACTIONNÉ PAR SOUPAPE

(30) Priority: 03.06.2020 EP 20178071
(43) Date of publication of application: 12.04.2023
(73) Proprietor: Koninklijke Philips N.V., 5656 AG Eindhoven (NL)
(72) Inventor: CERULLO, Alfredo, 5656 AE Eindhoven (NL); PAZOOKI, Amir Masoud Akbari, 5656 AE Eindhoven (NL); DOBRUSSKIN, Christoph, 5656 AE Eindhoven (NL); VAN DER KOOI, Johannes Tseard, 5656 AE Eindhoven (NL)
(74) Representative: Philips Intellectual Property & Standards
(86) International application number: PCT/EP2021/063789
(87) International publication number: WO 2021/244888

(56) References cited:
- EP-A1- 2 138 075
- EP-A1- 2 594 163
- EP-A1- 3 214 008
- WO-A1-2009/112552
- WO-A1-2016/038371

## Description

### FIELD OF THE INVENTION

The invention relates to the field of drinking devices. In particular, it relates to the field of valve actuated bottle caps.

### BACKGROUND OF THE INVENTION

Young children and the elderly may find it difficult to drink from ordinary cups without spilling. This might be due to a lack of control over the cup or reduced mobility.

It is known that cups with a drinking spout or straw can provide considerable help. However, this may be undesirable for small children, as it may inhibit proper oral development. Furthermore, it may prevent them from learning the coordination needed to drink from a normal cup. Additionally, adults might be uncomfortable using a drinking cup with a spout, since this is indicating reduced mobility to the surroundings.

Drinking cups with openings along the periphery of the cover are also known. Some of these drinking cups typically work by using suction in order to drink. However, these drinking cups typically contain elements which are complex to manufacture and difficult to clean.

In general, the above mentioned cups working with suction provide only a limited amount of liquid, and the learning effect of drinking as if drinking from a normal cup is greatly diminished.

Drinking cups with an actuation lid on the inside of the drinking rim are also known. By pressing the actuation lid with the upper lip, a user actuates a valve mechanism connected to that lid, and liquid can then flow, driven by gravity towards the mouth of a user. When not actuated, the lid with the associated seal will prevent unwanted leakage. Disadvantages of these cups are the fact that the movement, and thus the actuation of the valve, is often not well defined, which makes the flow of liquid difficult to control and can easily lead to either too much or too little flow of liquid. Furthermore, pressure from the top onto any portion of the lid will almost always lead to the opening of the valve and cause, potentially, leakage.

WO 2016/038371, 2009/112552, EP 2 138 075 and EP 2 954 163 each disclose a valve assembly for a liquid container, having a circular valve area defined around a rim of the drinking vessel. EP 3 214 008 discloses another drinking container lid with a flap that opens and closes a drinking opening WO 2016/03871 A1 discloses a bottle cap according to the preamble of claim 1.

Thus, there is a need for an improved bottle cap.

### SUMMARY OF THE INVENTION

The invention is defined by the claims.

According to examples in accordance with an aspect of the invention, there is provided a bottle cap comprising:
a base part having an outer rim;
an actuation lid attached to the base part with a joint, the actuation lid being positioned at least partly within the outer rim, the actuation lid pivoting relative to the base part about the joint; and
a fluid valve positioned within the outer rim, wherein the fluid valve comprises two states:
   a closed state which closes a fluid pathway from outside the actuation lid through the base part; and
   an open state which opens the fluid pathway,
   wherein the fluid valve is configured to change from the closed state to the open state at a location around the outer rim based on an external force being applied to the actuation lid at that location around the outer rim,
   characterized in that the joint comprises a ball joint.

The invention is based on the use of a ball joint, in order to better define the location at which a fluid valve opens when the actuation lid acts on the fluid valve.

The ball joint also allows for a more intuitive feel for how much external force to apply with the upper lip in order to achieve the desired flow rate. Additionally, the ball joint allows the construction of a bottle cap which can be securely sealed with little risk of leaking (when the fluid valve is in a closed state), and allows fluid to flow through without the need of suction from the user.

The ball joint is for example circular, by it may also be slightly elliptical . This may for example be used to provide a bias towards the closed position based on the larger diameter when off center.

The bottle cap is used in the same way as drinking from a normal cup, i.e. the cup is tilted until liquid reaches the rim. The liquid is allowed to flow by the user pressing on the actuation lid to open the fluid valve. This is suitable for training children, while still providing leak prevention.

The use of a ball joint means that only a force at the rim will open the valve, whereas a force applied at the pivot will not. The component to which force is applied can be recessed slightly to reduce the risk of accidental leakage. A force applied at the center, to the ball joint, will not result in leakage as it will not induce the pivoting movement required to open the fluid valve.

An elastic element (which may be an additional part or it may be part of the structure of the fluid valve itself) is for example used to bring the actuation lid to the closed position when no external force is applied.

The actuation lid sits on top of the base part, connected by the ball joint, and can pivot by means of the ball joint. The bottle cap is for use mounted on a liquid container and is used to seal the fluid within the liquid container. In order for liquid to leave the liquid container (through the bottle cap), there is a fluid pathway between both sides of the bottle cap (the side mounted facing the bottle contents, and the side facing where the drinking takes place).

A fluid valve is thus placed at the fluid pathway. When the fluid valve is in an open state, liquid can flow through the fluid pathway and through the valve. However, when the fluid valve is in a closed state, the liquid will not be able to flow through the fluid valve (and thus may not be able to leave the liquid container, if the bottle cap is mounted on the liquid container).

The actuation lid is connected and/or coupled to the fluid valve, in order to change it from an open state to a closed state when an external force is applied to the actuation lid. For example, the fluid valve could be a trap door mechanism, and the actuation lid could open the trap door mechanism when a force is applied to it. The external force could, for example, be a user pressing the actuation lid with the upper lip.

The ball joint is preferably a rigid structure. This provides more reliable actuation of the valve than a suspension using some kind of flexible frame.

The fluid valve may comprise a flexible material element between the base part and the actuation lid. This flexible material functions to provide an effective seal.

In a first example, the actuation lid comprises an actuation rim facing the flexible material element for locally deforming the flexible material element. This local deformation result in local valve opening.

The actuation rim may rest on the flexible material element when the fluid valve is in the closed state and the fluid valve may be changed to an open state when an external force is applied to through the actuation rim to the flexible material element.

In a second example, the actuation lid comprises an outer skirt which faces an inner surface of the outer rim and the fluid valve is defined between the outer skirt and the inner surface of the outer rim. In this case, movement of the outer skirt (caused by movement of the ball joint) aligns the fluid valve within a space between the outer skirt and the outer rim (closing that space and closing the valve) or removes the fluid valve from that space (opening the valve). In this example the fluid valve is moved in and out of engagement rather than being deformed.

In a third example, the ball joint comprises a ball and a socket, wherein the fluid valve comprises a first channel in the surface of the ball and a second channel in the surface of the socket, wherein the first and second channels overlap to define the open state and are separated to define the closed state. In this case, a flexible member is not needed. Instead, a pair of channels are moved in and out of engagement.

The actuation lid and the base part may be circular, and the ball joint may be at the center.

The ball joint may comprise a ball and a socket, and the base part may comprise the socket of the ball joint and the actuation lid comprises the ball of the ball joint. Alternatively, the base part may comprise the ball of the ball joint and the actuation lid comprises the socket of the ball joint.

The bottle cap may further comprise an air valve. For example, the fluid valve could also be the air valve (for example one location allowing liquid to flow and another location allowing air to flow), the base part could house an air valve, the actuation lid could house the air valve or the mounting mechanism could be configured such that, when the bottle cap is mounted on a bottle, there is an air valve at the connection between the bottle and bottle cap.

The fluid valve is preferably configured to the closed state (by movement of the valve and optionally also the actuation lid) if there is no external force applied. Thus, the valve closes automatically when the bottle cap is not in use.

The bottle cap may further comprise a locking mechanism configured to lock the fluid valve in the closed state when the locking mechanism is actuated.

The invention also provides a bottle comprising:
a liquid container; and
the bottle cap as defined above mountable to the liquid container.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 shows in schematic form a cross section of a bottle with a bottle cap in a closed state;
Fig. 2 shows in schematic form a cross section of a bottle with a bottle cap in an open state;
Fig. 3 shows a first example of a bottle cap design in more detail;
Fig. 4 shows a second example of a bottle cap design;
Fig. 5 shows a third example of a bottle cap design with the fluid valve in an open state; and
Fig. 6 shows the third example of a bottle cap design with the fluid valve in a closed state.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a bottle cap comprising a base part having an outer rim, an actuation lid attached to the base part with a joint and positioned within the outer rim and a fluid valve positioned within the outer rim. The fluid valve comprises two states: a closed state which closes a fluid pathway from outside the actuation lid to the base part and an open state which opens the fluid pathway. The fluid valve is configured to change from the closed state to the open state at a location around the rim based on an external force being applied to the actuation lid at that location around the rim. The joint comprises a ball joint.

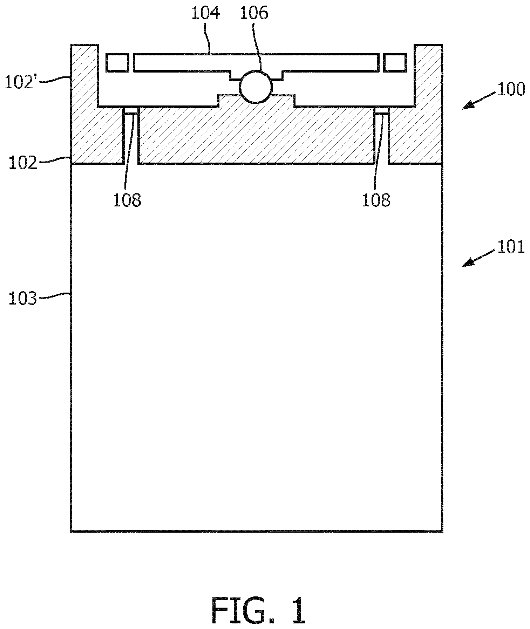

Fig. 1 shows in schematic form a cross section of a bottle 101 with a bottle cap 100 in a closed state. A pivot joint, in the form of a ball joint mechanism 106, is used to hold an actuation lid 104 on a base part 102 of the bottle cap 100. The base part has an outer rim 102'. This outer rim defines an inner cavity at the inner side of the outer rim, and defines an outer wall of the bottle cap at the outer side of the outer rim. The actuation lid 104 is located with the cavity. The bottle cap 100 is mounted on a bottle base 103.

The actuation lid 104, when moved away from the central axis of the ball joint 106, actuates a fluid valve 108 near the outer circumference of the base part 102. The actuation lid 104 and the base part 102 are circular, and the ball joint 106 is at the center.

The fluid valve 108 is positioned between the actuation lid 104 and the other side of the base part 102 (which is in fluid communication with the interior of the bottle base 103). The fluid valve 108 provides a controllable coupling between two opposite sides of the fluid valve 108 (i.e. inside the bottle 101 and outside the bottle 101). One side is connected to the ambient surroundings so that liquid can flow to the user through the fluid valve 108 (when the fluid valve 108 is in an open state). The other side can be connected to the contents of the bottle 101 so that liquid from inside the bottle 101 can reach the fluid valve 108.

The fluid valve 108 can also control the amount of fluid which can flow through the fluid pathway of the bottle cap 100. For example, when a user applies an external force to the actuation lid 104, the flow rate of the liquid (how much liquid can leave the bottle cap 100 per sec/min/hour etc.) may be dependent on the amount of external force which is applied to the actuation lid 104. For example, the harder a user presses their upper lip on the actuation lid 104, the larger the fluid pathway becomes, thus allowing the user to control the fluid flow into their mouth.

When the bottle cap 100 is mounted on the liquid container 103, it creates a sealed bottle 101. When the actuation lid 104 is in its rest-position, liquid cannot exit the bottle 101. However, when the actuation lid 104 is moved out of its rest position by an external force towards the bottle base 103 (by the lips of a user pressing downwards), it actuates the fluid valve 108 so that liquid can exit the bottle 101 through the fluid valve 108 towards the mouth of the user. The actuation lid 104 could then be configured to return the fluid valve 108 to the closed state when there is no external force applied.

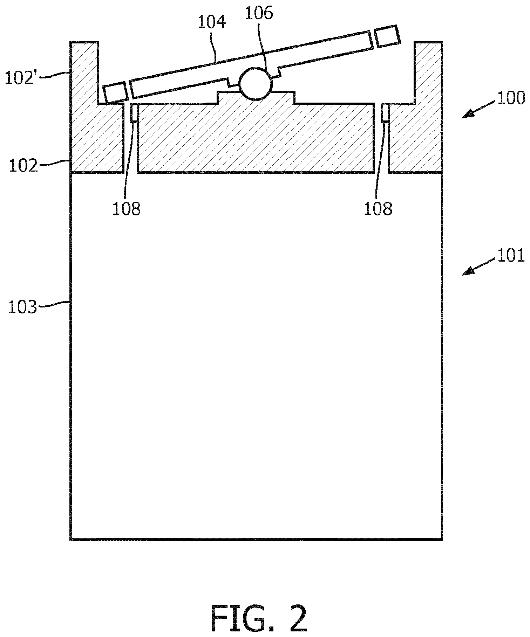

Fig. 2 shows a cross section of the bottle 101 of Fig. 1 with the bottle cap 100 in an open state. The actuation lid 104 is pushed down at a location selected by the user, which makes the actuation lid 104 pivot around the ball joint 106. The pivoting is about an up-down (i.e. vertical) axis and in a plane which includes the location at which the user presses down on the actuation lid. The actuation lid 104 is coupled to the fluid valve 108 (or at least part of the fluid valve 108), such that the fluid valve 108 is opened when the actuation lid 104 is, for example, pushed down. The way the actuation lid opens the valve is not represented in Figs. 1 and 2. Examples are given below.

There may be one or more channels within the actuation lid 104 and the base part 102 which allow the liquid to flow from the liquid container 103, through the base part 102 and through the actuation lid 104 to the mouth of the user.

The fluid valve 108 may be arranged to open at two different locations (e.g. opposite lateral sides) as shown in Fig. 2. This allows the fluid valve 108 to also act as an air valve on the opposite side, thus equalizing the pressure inside the bottle 101 (when the bottle cap 100 is mounted on the bottle 101).

An air valve is an important aspect of a sealed bottle, as without air flow between the inside and the outside of a bottle 101, the pressure inside the drinking bottle would change as liquid is being removed (e.g. from drinking). Thus, an air valve allows the pressure inside the bottle 101 to remain the same as the atmospheric pressure, which aids in drinking from the bottle 101. This means that it would be beneficial for a bottle cap 100 to have an air valve.

However, if there is an air valve, liquid could also escape from the air valve. In order to completely seal a bottle 100 with the bottle cap 100 when not in use, the air valve must also have an open state (air flow) and a closed state (no air flow). The open state of the air valve should coincide with the open state of the fluid valve 108, and vice versa. Thus, when the fluid valve 108 is in an open state (i.e. liquid can leave the bottle 101), the air valve should also be open (i.e. air can enter the bottle 101). Additionally, when the fluid valve 108 is in a closed state, the air valve should also be in a closed state so that the bottle 101 is completely sealed and no liquid can leak from it.

One way of achieving this is for the fluid valve 108 also to function as the air valve, as shown in Fig. 2. This may be done by the fluid valve 108 opening at one location to allow liquid through, and also opening at a different location to allow air through. When an external force is applied to the actuation lid 104, the side which had the external force applied opens and allows liquid through. When the actuation lid 104 is actuating the fluid valve 108, the ball joint 106 makes the other side of the actuation lid 104 rise up, such that the fluid valve 108 on the other side is also open.

Alternatively, the base part 102 could have a separate air valve. For example, the air valve could be in a central section of the base part 102 (e.g. on or near the ball joint 106). This is because when drinking, liquid typically stays around the outer rim areas, and as such, it is unlikely for liquid to flow through the central section of the bottle cap 100.

The air valve could also be part of the ball joint 106. A section of the actuation lid 104 at or near the ball joint 106 could have air channels, a section of the base part 102 at or near the ball joint 106 could also have air channels and the ball joint 106 could also have air channels running through. The air channels would not meet when the actuation lid 104 is horizontal (and as such, the fluid valve 108 is in a closed state). However, when an external force is applied to the actuation lid 104, the actuation lid 104 would rotate around the ball joint 106, such that at least one air channel from each of the base part 102, ball joint 106 and actuation lid 104 meet and create an air flow. This would also allow a complete seal between the inside part of a bottle 101 and the outside, when the bottle 101 has the bottle cap 100 mounted.

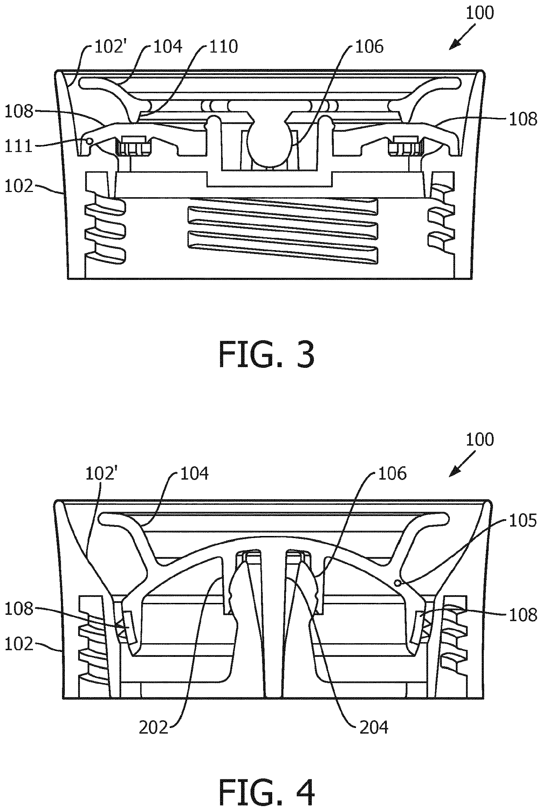

Fig. 3 shows a first example of a bottle cap design. The bottle cap 100 is suitable to be screwed on a bottle 101. The bottle cap 100 comprises an actuation lid 104 being positioned near the drinking rim, whereby the actuation lid 104 is, in its rest-position, oriented perpendicular to the central axis of the drinking rim, and whereby the movement of the actuation lid 104 is fixed around a central anchor point using the ball joint 106 positioned along a central axis. The ball joint is below the drinking rim.

The fluid valve 108 could be made of, or partially made of, a flexible material element. For example, the fluid valve 108 may be made from a flexible, resilient material such as silicone. Alternatively, part of the fluid valve 108 could be made of a flexible material element, such that the flexible material element is deformed when the fluid valve 108 is actuated, which moves a solid part of the fluid valve 108 in order to open the fluid pathway. The actuation lid 104 could be designed such that, when there is no external force applied, it returns the fluid valve 108 to an open position. Alternatively, the fluid valve 108 could be designed such that the flexible material element is in equilibrium when there is no external force applied (and thus the fluid valve 108 is in a closed state). In this case, when the flexible material is deformed, it would only stay in an open position whilst there is an external force being applied (e.g. mouth pushing down on the actuation lid 104), and would return to a closed position when there is no external force applied. A spring mechanism could also be used.

The flexible element could be used to bias the actuation lid 104 to stay in a neutral position (in equilibrium). Advantageously, the flexible element could be fixed to the base part 102 in such a way that it is pre-tensioned against the base part 102 across the area where it covers fluid path channels. This would ensure a more secure seal.

In order to deform the fluid valve 108, the actuation lid 104 has an actuation rim 110 facing the flexible material element. The actuation rim 110 is designed such that, when an external force is applied to the actuation lid 104, the actuation rim 110 locally deforms the flexible material element. For example, by pushing down at the contact point between the actuation rim 110 and the flexible material element 108, another portion 111 lifts and thereby opens the fluid pathway through the valve.

The amount of liquid which is allowed through the fluid pathway may depend on the amount of external force which is applied. This may be achieved by having fluid pathway channels which are typically blocked by the fluid valve 108 (in the closed state) but gradually open up as the flexible material element is deformed.

In the example shown, the actuation rim 110 rests on the flexible material element when the fluid valve 108 is in the closed state. The fluid valve 108 changes to an open state when an external force is applied, through the actuation rim 110, to the flexible material element.

In Fig. 3, the base part 102 houses the socket of the ball joint 106 and the actuation lid 104 comprises the ball of the ball joint 106. However, it is also possible for the base part 102 to comprise the ball of the ball joint 106, and for the actuation lid 104 to house the socket of the ball joint 106.

Fig. 4 shows a second example of a bottle cap 100 with a ball joint 106. In this example, the socket of the ball joint 106 is part of the actuation lid 104 and is significantly larger than in the previous example. The ball of the ball joint 106 is part of the base part 102. A holding arm (or holding arms) 202 can be used to ensure the socket stays central around the ball and can pivot around a central axis.

A returning arm 204 is used to ensure the actuation lid 104 returns to a closed position when there is no external force applied to the actuation lid 104. The returning arm 204 is partly flexible, such that the socket may move around the ball when an external force is applied, but the returning arm 204 returns the socket to an equilibrium position (e.g. the center) when there is no external force applied. This returning arm is needed because in this example, the fluid valve does not itself provide a returning force, as well be clear from the description below. The returning arm extends through a conical opening. The sides of the conical opening function as a brake mechanism to limit the range of movement of the ball and socket j oint. The return force provided by the returning arm is designed for example such that a user cannot be injured when taking their lips off the actuation lid 104.

The actuation lid has the socket in the middle and a surrounding skirt 105. The skirt (almost) reaches an inner surface of the outer rim 102' (with a small spacing between them).

The fluid valve 108 again comprises a flexible material element, placed on an outer surface of the skirt 105 of the socket facing the outer rim, such that, in equilibrium, the fluid valve 108 touches the inner surface of the outer rim 102' of the base part 102. Thus, it closes the fluid passageway and forms a seal. The fluid valve comprises an annular band around the skirt.

When a external force is applied to the outer rim of the actuation lid 104, the fluid valve 108 at that location moves below a contact area at the inner surface of the base part 102, allowing fluid to flow. Additionally, the opposite side also opens by moving above the contact area to create an air valve and allow air to flow.

In this example, the fluid valve 108 has a plurality of protruding flexible material elements. The elements may be used to control the flow of liquid through the bottle cap 100. The amount of rotation of the ball and socket joint may control the amount of fluid flow.

The fluid valve 108 and the actuation lid 104 may be combined into a single part, for example, using 2k molding techniques. The fluid valve 108 could also be glued onto the actuation lid 104, or removable from the actuation lid 104.

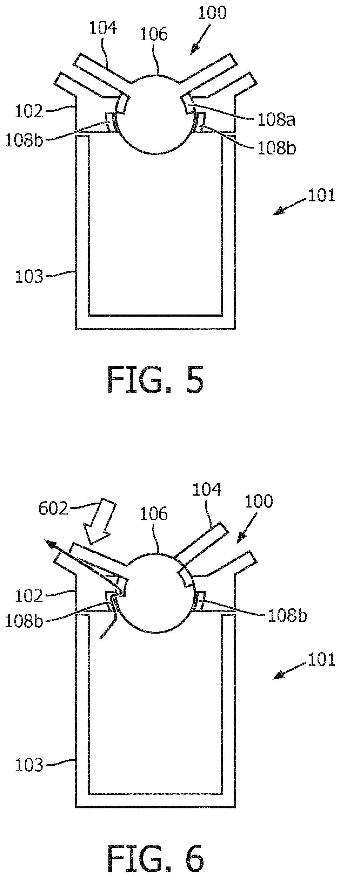

Fig. 5 shows a third example of a bottle cap 100 with a ball joint 106. The designs shown in Figs. 1 to 4 show implementations of the bottle cap 100 whereby the fluid valve 108 is positioned at the outer edge of the bottle cap 100. This is advantageous as the bottle cap 100 needs to be minimally tilted to allow fluid to flow from the liquid container 103 through the fluid valve 108 to the mouth of the user.

However, in some cases it may be desirable to move the fluid valve 108 closer to the center, as shown in Fig. 5. In this exemplary design, the fluid valve 108 is formed by channels that are on the inside and outside of the ball joint 106. One channel 108a is on the outer surface of the ball and another channel 108b is on the inner surface of the socket. The channels run into dead ends and do not communicate with each other when the actuation lid 104 is in its closed position (fluid valve 108 is in a closed state) but form a connection between the inside of a liquid container 103 and the outside of the bottle 101 (at a particular location around the base part 102) when the actuation lid 104 is actuated by an external force.

The channels each comprise an annulus. In the rest positon, one annulus is above the other and they do not overlap. In the actuated position, the channels overlap locally at one location (and they are further separated at a diametrically opposite location).

Fig. 5 shows a bottle 101 with a bottle cap 100 and a liquid container 103, when the actuation lid 104 of the bottle cap 100 is in a neutral state (i.e. the fluid valve 108 is closed). When an external force is applied to a location of the actuation lid 104, the ball joint 106 rotates around the center of the base part 102, such that the fluid valve 108 is in an open state.

Fig. 6 shows the bottle 101 of Fig. 5 when the fluid valve 108 is in an open state actuated by an external force 602. A fluid pathway can be seen from inside the liquid container 103 to the outside of the bottle 101 because the two channels overlap. The further down the actuation lid 104 is pressed, the more the channels at the ball joint 106 meet, thus allowing a larger flow of liquid through the fluid pathway. The actuation lid 104 could be configured to require different amounts of external force 602 to move, thus making the flow of liquid dependent on the external force 602 applied.

Alternatively, the ball joint 106 may have a diameter only slightly smaller than the width of the base part 102. In this case, the design of Figs. 5 and 6 can be used with the advantage of having the fluid pathway near the outer edges. In order for the ball joint 106 not to occupy too much space, an upper portion of the ball joint 106 and/or a lower portion of the ball joint may be removed instead of the complete sphere shown. The upper portion may be shaped to allow the nose of a user to fit while drinking.

In general, for any of the examples previously mentioned, the actuation lid 104 is preferably designed with an outer rim that is positioned roughly at the same height as the drinking rim which allows for a users upper lip to depress the rim and initiate a flow of liquid out of the cup. The actuation lid 104 could also have a reduced height in the center to allow space for the nose of a user while drinking.

As explained above, a ball and socket connection results in movement of the actuation lid 104 down on one side and up on the other side. This may be advantageous as the fluid valve 108 can be opened on opposite sides of the drinking vessel, to allow liquid to flow out on the side where the actuation lid 104 is forced down, and to allow air in on the opposite side to equalize any pressure differences between the inside volume and the surrounding. Air valves may be introduced as an alternative, or the fluid valve 108 may provide large enough an opening to also function as an air valve.

The bottle cap 100 could also have a locking mechanism. The locking mechanism could to lock the fluid valve 108 in the closed state to prevent the fluid valve 108 from being accidentally opened when not in use.

The ball joint 106 allows a small number of parts to be used when designing the bottle cap 100. This adds to the user friendliness in assembly and ease of cleaning.

The bottle cap 100 may be designed to be used in conjunction with other known liquid containers/bottles (e.g. the mounting mechanism could be a standard mounting mechanism). Alternatively, a liquid container 103 may also designed to be purposely used in conjunction with the bottle cap 100. Many known mounting mechanisms exist which could be used: screws, clips etc.

In any of the examples previously mentioned, the fluid valve 108 could be annular. Similarly, in any example mentioned, the fluid valve 108 could be an independent piece, or the fluid valve 108 could be connected and/or mounted to either the base part 102 or the actuation lid 104. The fluid valve 108 could be connected to the base part 102/actuation lid 104 by any one of gluing, heating, permanently attaching, clipping etc. Alternatively, the fluid valve 108 could be part of the base part 102 or could be part of the actuation lid 104.

In all of the examples above, the fluid pathway is through a base wall of the base part. Instead, the fluid pathway may extend radially through a skirt of the base wall. Indeed, any fluid pathway may be used that connects the container volume to the rim where the user wishes to drink.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. A bottle cap (100) comprising:
a base part (102) having an outer rim (102');
an actuation lid (104) attached to the base part (102) with a joint (106), the actuation lid being positioned at least partly within the outer rim (102'), the actuation lid pivoting relative to the base part about the joint; and
a fluid valve (108) positioned within the outer rim, wherein the fluid valve (108) comprises two states:
a closed state which closes a fluid pathway from outside the actuation lid (104) through the base part (102); and
an open state which opens the fluid pathway,
wherein the fluid valve (108) is configured to change from the closed state to the open state at a location around the outer rim based on an external force being applied to the actuation lid (104) at that location around the outer rim,
**characterised in that** the joint comprises a ball joint.

2. The bottle cap (100) of claim 1, wherein the ball joint comprises a ball and a socket, wherein the fluid valve comprises a first channel in the surface of the ball and a second channel in the surface of the socket, wherein the first and second channels overlap to define the open state and are separated to define the closed state.

3. The bottle cap (100) of claim 1 or 2, wherein the actuation lid (104) and the base part (102) are circular, and the ball joint (106) is at the center.

4. The bottle cap (100) of any one of claims 1 to 3, wherein the fluid valve (108) comprises a flexible material element between the base part (102) and the actuation lid (104).

5. The bottle cap (100) of claim 4, wherein the actuation lid (104) comprises an actuation rim (110) facing the flexible material element for locally deforming the flexible material element.

6. The bottle cap (100) of claim 5, wherein the actuation rim (110) rests on the flexible material element when the fluid valve (108) is in the closed state and wherein the fluid valve (108) is changed to an open state when an external force is applied through the actuation rim (110) to the flexible material element.

7. The bottle cap of any one of claims 4 to 6, wherein the flexible material element is configured to return the fluid valve to the closed state if no external force is applied.

8. The bottle cap (100) of any one of claim 1 to 7, wherein the actuation lid (104) comprises an outer skirt (105) which faces an inner surface of the outer rim (102') and the fluid valve is defined between the outer skirt and the inner surface of the outer rim.

9. The bottle cap (100) of any one of claims 1 to 8, wherein the fluid valve (108) additionally functions as an air valve.

10. The bottle cap (100) of any one of claims 1 to 8, wherein the base part (102) further comprises an air valve.

11. The bottle cap (100) of any one of claims 1 to 8, wherein the actuation lid (104) further comprises an air valve.

12. The bottle cap (100) of any one of claims 1 to 3, configured to return the fluid valve (108) and/or the lid to the closed state if there is no external force applied.

13. The bottle cap (100) of any one of claims 1 to 12, further comprising a locking mechanism configured to lock the fluid valve (108) in the closed state when the locking mechanism is actuated.

14. A bottle comprising:
a liquid container (302); and
the bottle cap (100) of any one of claims 1 to 13 mountable to the liquid container.

## Patentansprüche

1. Flaschenverschluss (100), umfassend:
ein Basisteil (102) mit einem äußeren Rand (102');
einen Betätigungsdeckel (104), der an dem Basisteil (102) mit einem Gelenk (106) befestigt ist, wobei der Betätigungsdeckel zumindest teilweise innerhalb des äußeren Randes (102') positioniert ist, wobei der Betätigungsdeckel relativ zu dem Basisteil um das Gelenk schwenkt; und
ein Flüssigkeitsventil (108), das innerhalb des äußeren Randes angeordnet ist, wobei das Flüssigkeitsventil (108) zwei Zustände aufweist:
einen geschlossenen Zustand, der einen Flüssigkeitsweg von außerhalb des Betätigungsdeckels (104) durch das Basisteil (102) verschließt; und
einen offenen Zustand, der den Flüssigkeitsweg öffnet,
wobei das Flüssigkeitsventil (108) so konfiguriert ist, dass es an einer Stelle um den äußeren Rand herum vom geschlossenen Zustand in den offenen Zustand wechselt, basierend auf einer äußeren Kraft, die auf den Betätigungsdeckel (104) an dieser Stelle um den äußeren Rand herum ausgeübt wird, **dadurch gekennzeichnet, dass** das Gelenk ein Kugelgelenk umfasst.

2. Flaschenverschluss (100) nach Anspruch 1, wobei das Kugelgelenk eine Kugel und eine Pfanne umfasst, wobei das Flüssigkeitsventil einen ersten Kanal in der Oberfläche der Kugel und einen zweiten Kanal in der Oberfläche der Pfanne umfasst, wobei der erste und der zweite Kanal sich überlappen, um den offenen Zustand zu definieren, und getrennt sind, um den geschlossenen Zustand zu definieren.

3. Flaschenverschluss (100) nach Anspruch 1 oder 2, wobei der Betätigungsdeckel (104) und das Basisteil (102) kreisförmig sind und sich das Kugelgelenk (106) in der Mitte befindet.

4. Flaschenverschluss (100) nach einem der Ansprüche 1 bis 3, wobei das Flüssigkeitsventil (108) ein flexibles Materialelement zwischen dem Basisteil (102) und dem Betätigungsdeckel (104) umfasst.

5. Flaschenverschluss (100) nach Anspruch 4, wobei der Betätigungsdeckel (104) einen Betätigungsrand (110) aufweist, der dem flexiblen Materialelement zugewandt ist, um das flexible Materialelement lokal zu verformen.

6. Flaschenverschluss (100) nach Anspruch 5, wobei der Betätigungsrand (110) auf dem flexiblen Materialelement ruht, wenn sich das Flüssigkeitsventil (108) im geschlossenen Zustand befindet, und wobei das Flüssigkeitsventil (108) in einen offenen Zustand wechselt, wenn eine äußere Kraft über den Betätigungsrand (110) auf das flexible Materialelement ausgeübt wird.

7. Flaschenverschluss nach einem der Ansprüche 4 bis 6, wobei das flexible Materialelement so konfiguriert ist, dass es das Flüssigkeitsventil in den geschlossenen Zustand zurückbringt, wenn keine äußere Kraft ausgeübt wird.

8. Flaschenverschluss (100) nach einem der Ansprüche 1 bis 7, wobei der Betätigungsdeckel (104) eine äußere Schürze (105) umfasst, die einer Innenfläche des äußeren Randes (102') zugewandt ist, und das Flüssigkeitsventil zwischen der äußeren Schürze und der Innenfläche des äußeren Randes definiert ist.

9. Flaschenverschluss (100) nach einem der Ansprüche 1 bis 8, wobei das Flüssigkeitsventil (108) zusätzlich als Luftventil fungiert.

10. Flaschenverschluss (100) nach einem der Ansprüche 1 bis 8, wobei das Basisteil (102) außerdem ein Luftventil umfasst.

11. Flaschenverschluss (100) nach einem der Ansprüche 1 bis 8, wobei der Betätigungsdeckel (104) ferner ein Luftventil umfasst.

12. Flaschenverschluss (100) nach einem der Ansprüche 1 bis 3, die so konfiguriert ist, dass er das Flüssigkeitsventil (108) und/oder den Deckel wieder in den geschlossenen Zustand bringt, wenn keine äußere Kraft ausgeübt wird.

13. Flaschenverschluss (100) nach einem der Ansprüche 1 bis 12, der ferner einen Verriegelungsmechanismus umfasst, der so konfiguriert ist, dass er das Flüssigkeitsventil (108) im geschlossenen Zustand verriegelt, wenn der Verriegelungsmechanismus betätigt wird.

14. Flasche, umfassend:
einen Flüssigkeitsbehälter (302); und
den Flaschenverschluss (100) nach einem der Ansprüche 1 bis 13, der auf den Flüssigkeitsbehälter montiert werden kann.

## Revendications

1. Bouchon de bouteille (100) comprenant:
une partie de base (102) ayant un rebord externe (102');
un couvercle d'actionnement (104) fixé à la partie de base (102) avec un joint (106), le couvercle d'actionnement étant positionné au moins en partie à l'intérieur du rebord extérieur (102'), le couvercle d'actionnement pivotant par rapport à la partie de base autour du joint; et
une soupape à fluide (108) positionnée à l'intérieur du rebord extérieur, où la soupape à fluide (108) comprend deux états:
un état fermé qui ferme une voie de passage de fluide depuis l'extérieur du couvercle d'actionnement (104) à travers la partie de base (102); et
un état ouvert qui ouvre la voie de passage du fluide,
où la soupape à fluide (108) est configurée pour passer de l'état fermé à l'état ouvert en correspondance d'un emplacement autour du rebord extérieur en fonction d'une force externe qui est appliquée au couvercle d'actionnement (104) en correspondance de cet emplacement autour du rebord extérieur,
caractérisé en que le joint comprend un joint à rotule.

2. Bouchon de bouteille (100) selon la revendication 1, dans lequel le joint à rotule comprend une rotule et une douille, où la soupape à fluide comprend un premier canal dans la surface de la rotule et un second canal dans la surface de la douille, où les premier et second canaux se chevauchent pour définir l'état ouvert et sont séparés pour définir l'état fermé.

3. Bouchon de bouteille (100) selon la revendication 1 ou 2, dans lequel le couvercle d'actionnement (104) et la partie de base (102) sont circulaires, et la rotule (106) est au centre.

4. Bouchon de bouteille (100) selon l'une quelconque des revendications 1 à 3, dans lequel la soupape à fluide (108) comprend un élément en matériau flexible entre la partie de base (102) et le couvercle d'actionnement (104).

5. Bouchon de bouteille (100) selon la revendication 4, dans lequel le couvercle d'actionnement (104) comprend un rebord d'actionnement (110) faisant face à l'élément en matériau flexible pour déformer localement l'élément en matériau flexible.

6. Bouchon de bouteille (100) selon la revendication 5, dans lequel le rebord d'actionnement (110) repose sur l'élément en matériau flexible lorsque la soupape à fluide (108) est à l'état fermé et dans lequel la soupape à fluide (108) est changée en un état ouvert lorsqu'une force externe est appliquée à travers le rebord d'actionnement (110) sur l'élément en matériau flexible.

7. Bouchon de bouteille selon l'une quelconque des revendications 4 à 6, dans lequel l'élément en matériau flexible est configuré pour ramener la soupape à fluide à l'état fermé si aucune force externe n'est appliquée.

8. Bouchon de bouteille (100) selon l'une quelconque des revendications 1 à 7, dans lequel le couvercle d'actionnement (104) comprend une jupe externe (105) qui fait face à une surface interne du rebord externe (102') et la soupape à fluide est définie entre la jupe extérieure et la surface intérieure du rebord extérieur.

9. Bouchon de bouteille (100) selon l'une quelconque des revendications 1 à 8, dans lequel la soupape à fluide (108) fonctionne en outre comme une soupape à air.

10. Bouchon de bouteille (100) selon l'une quelconque des revendications 1 à 8, dans lequel la partie de base (102) comprend en outre une soupape à air.

11. Bouchon de bouteille (100) selon l'une quelconque des revendications 1 à 8, dans lequel le couvercle d'actionnement (104) comprend en outre une soupape à air.

12. Bouchon de bouteille (100) selon l'une quelconque des revendications 1 à 3, configuré pour ramener la soupape à fluide (108) et/ou le couvercle à l'état fermé si aucune force externe n'est appliquée.

13. Bouchon de bouteille (100) selon l'une quelconque des revendications 1 à 12, comprenant en outre un mécanisme de verrouillage configuré pour verrouiller la soupape à fluide (108) dans l'état fermé lorsque le mécanisme de verrouillage est actionné.

14. Bouteille comprenant:
un récipient de liquide (302); et
le bouchon de bouteille (100) selon l'une quelconque des revendications 1 à 13 qui peut être monté sur le récipient de liquide.
